# FASCICULE DE BREVET EUROPEEN

(11) **EP 1 003 371 B1**
(45) Date de publication et mention de la délivrance du brevet: **19.12.2001**
(21) Numéro de dépôt: 98939442.4
(22) Date de dépôt: 05.08.1998
(51) Int. Cl.: A01N 37/06, A01N 37/02

(54) **COMPOSITION DESINFECTANTE**
DESINFIZIERENDE ZUSAMMENSETZUNG
DISINFECTANT COMPOSITION

(30) Priorité: 05.08.1997 BE 9700663
(43) Date de publication de la demande: 31.05.2000
(73) Titulaire: Sopura S.A., 6180 Courcelles (BE)
(72) Inventeur: VELINGS, Nicolas, B-1420 Braine-L'Alleud (BE); HERMAN, Ferdinand, B-9800 Deinze (BE); LONCIN, Paul-Eric, B-1600 Sint-Pieters Leeuw (BE)
(74) Mandataire: De Vleeschauwer, Natalie
(86) Numéro de dépôt international: BE9800119
(87) Numéro de publication internationale: WO9907222

(56) Documents cités:
- EP-A- 0 135 898
- EP-A- 0 147 102
- EP-A- 0 245 928
- EP-A- 0 524 075
- WO-A-83/00163
- WO-A-86/05510
- WO-A-94/10837
- WO-A-96/11572
- DE-A- 3 229 097
- US-A- 5 391 379

## Description

La présente invention a pour objet une composition nettoyante et désinfectante particulièrement utile pour le nettoyage et la désinfection de canalisations et cuves d'installations de l'industrie alimentaire, en particulier de brasserie, laiterie, etc.

Les compositions pour le nettoyage et la désinfection d'installations des industries agroalimentaires sont principalement utilisées dans les systèmes appelés "Nettoyage en place" (NEP) ("Cleaning in place" - CIP en anglais), suivant lesquels l'installation est nettoyée et désinfectée sans être démontée, la composition de nettoyage désinfectante étant circulée dans l'installation par pompage et/ou appliquée par pulvérisation (au moyen de pulvérisateurs installés à demeure) de manière à atteindre toutes les parties de l'installation à traiter.

Pour être applicable de manière vraiment satisfaisante dans l'industrie alimentaire et plus particulièrement dans l'industrie brassicole, une telle composition désinfectante doit réunir plusieurs propriétés et répondre à plusieurs exigences qu'il est difficile de satisfaire simultanément.

Une solution d'emploi préparée par dilution d'une telle composition doit notamment avoir une action microbicide satisfaisante, aussi bien envers les bactéries gram + et gram - qu'envers des levures telles que les Saccharomyces, Candida, etc. On considère qu'on a obtenu un effet microbicide satisfaisant lorsqu'on obtient cinq réductions décimales de la population initiale des micro-organismes en moins de 20 minutes à 3°C.

Une telle solution d'emploi doit également être non moussante ou, en tout cas, très peu moussante. En effet, la formation de mousse peut provoquer la cavitation des pompes du système NEP, provoquant la non-circulation de la solution désinfectante et éventuellement la destruction des pompes. En outre, la formation, même modérée. de mousse peut occasionner des difficultés lors du rinçage.

Une telle solution d'emploi doit également avoir un bon pouvoir nettoyant et éventuellement détartrant, et être parfaitement rinçable, c'est-à-dire sans risque d'adsorption spécifique sur les surfaces des matériaux couramment rencontrés dans les installations de l'industrie alimentaire.

La composition concentrée doit être stable et homogène.

La solution d'emploi préparée par dilution de cette composition concentrée doit, elle aussi, être homogène et suffisamment stable pour permettre sa récupération. Les solutions d'emploi utilisées dans un système NEP sont, en effet, récupérées après utilisation et récoltées dans des réservoirs de stockage, pour être réutilisées lors d'une opération ultérieure de nettoyage et désinfection de l'installation.

Avant une nouvelle utilisation d'une solution d'emploi récupérée, la concentration de cette solution doit généralement être réajustée par l'addition d'une certaine quantité de la composition concentrée. Il est dès lors important que la concentration de la solution d'emploi puisse être aisément mesurée de manière continue. Lorsque la solution d'emploi contient un constituant tel qu'un acide fort, la mesure de la concentration en constituants actifs de la solution est très facilement faite par mesure de la conductivité électrique de la solution puisque cette conductivité est approximativement proportionnelle à la concentration en acide fort, laquelle concentration est proportionnelle à celle des autres constituants actifs de la solution d'emploi.

De nombreuses compositions pour le nettoyage et/ou la désinfection des installations de l'industrie agroalimentaire ont déjà été proposées.

EP-A-0147102 décrit une composition antimicrobienne contenant un acide inorganique et/ou un acide organique, un acide acétique α-halogéné et un acide gras aliphatique linéaire ou ramifié.

Par EP-A-0208403 on connaît une composition antimicrobienne qui contient essentiellement un alcool aliphatique ayant de 6 à 12 atomes de carbone et une acide aliphatique ayant de 2 à 6 atomes de carbone, substitué en position alpha par un radical chloro, iodo, cyano, nitro, amino, imino, thiohydroxy ou hydroxy. Cette composition peut également contenir un acide organique ou inorganique.

EP-A-0524075 décrit une composition acide désinfectante à base d'acide phosphorique et éventuellement d'acide hydroxyacétique, comprenant un agent tensioactif non ionique spécifique et un agent hydrotrope anionique du type arylsulfonate ou alkylsulfonate.

WO 83/00163 décrit une composition nettoyante et désinfectante comprenant un acide gras à courte chaîne, un agent hydrotrope ou agent stabilisant qui est capable de solubiliser l'acide gras lorsque la composition est diluée avec de l'eau, et un acide qui est compatible avec l'agent hydrotrope ou agent stabilisant.

DE-A-32 29 097 décrit une composition microbicide contenant des acides organiques et des alkylsulfonates et/ou des alkylsulfates dont le groupe alkyle, linéaire ou ramifié, contient de 8 à 18 atomes de carbone. La composition peut éventuellement contenir des alcools ou polyalcools inférieurs tels que : éthanol, n-propanol, isopropanol ou 1,2-propanediol. Pour régler le caractère moussant de la composition, celle ci-peut contenir des agents tensio-actifs non-ioniques tels que des polyglycol-éthers d'alcool gras.

Par WO-94/10837 on connaît une composition de nettoyage désinfectante diluable, un acide gras, un agent hydrotrope du type des sulfonates tensioactifs, un acide fort et un agent de stabilisation consistant en l'acide propionique, l'acide butyrique, l'acide valérique ou un mélange de ces acides.

On connaît par le document EP-A-0245928 des compositions de désinfection et de nettoyage pour l'industrie alimentaire, ces compositions contenant un acide monocarboxylique ou dicarboxylique, un agent solubilisant, un diluant et un acide ou un mélange d'acides pour assurer un pH inférieur à 5. Ainsi que spécifié dans le document EP-B-0245928, l'agent solubilisant doit être un agent du type oxyde de N,N-diméthylamine alkylée avec 8 à 10 atomes de carbone dans la partie alkyle pour que la composition soit stable et peu moussante.

On a maintenant trouvé que des compositions ne contenant pas cet agent solubilisant étaient stables et peu moussantes, et avaient une excellente efficacité antibactérienne et antilevurienne. De plus, les compositions selon l'invention peuvent aisément être évacuées des cuves et des canalisations par rinçage, de sorte que tout risque d'altération du goût ou de la saveur du produit alimentaire par la présence de traces de compositions suivant l'invention peut être évité. Les compositions selon l'invention sont donc des compositions fongicides et bactéricides, peu toxiques.

La composition désinfectante suivant l'invention, qui se présente soit sous forme concentrée, soit sous forme diluée, est une composition liquide comportant :
(a) un acide monocarboxylique de formule

   R-COOH

   avec R un radical alkyle à chaîne droite ou ramifiée, saturé ou insaturé, contenant de 6 à 12 atomes de carbone (de préférence de 8 à 10 atomes de carbone), ou un mélange de tels acides carboxyliques ;
(b) un acide minéral fort,
(c) un acide organique de formule :

   R'CH₂-CO₂H

   avec R' : H ou OH,
   ou un mélange de tels acides organiques;
(d) un ou des tensioactifs anioniques;
(e) un agent solubilisant consistant en un composé de formule :

   R''O(CH₂CH₂O)ₓ-H

   dans laquelle
   R" représente un radical alkyle en C₂ à C₆,
   x représente un nombre entier de 1 à 3,
   ou un mélange de tels composés;
   (f) de l'eau.

La composition selon l'invention est une composition bactéricide et fongicide.

Selon une forme de réalisation de la composition concentrée, elle comporte :
(a) de 0,25 à 20% en poids d'un acide monocarboxylique de formule :

   R-COOH

   avec R un radical alkyle à chaîne droite ou ramifiée, saturé ou insaturé, contenant de 6 à 12 atomes de carbone, ou d'un mélange de tels acides carboxyliques:
(b) de 20 à 40% en poids d'un acide minéral fort;
(c) de 0,25 à 7% en poids d'un acide organique de formule :

   R'CH₂-CO₂H

   avec R' : H ou OH,
   ou de 0,5 à 12% en poids d'un mélange de tels acides organiques;
(d) de 5 à 20% en poids de tensioactif(s) anionique(s), et
(e) de 1 à 10% en poids d'un agent solubilisant consistant en un composé de formule :

   R''O(CH₂CH₂O)ₓ-H
dans laquelle
R" représente un radical alkyle en C₃ à C₅,
x représente un nombre entier de 1 à 3,
   ou un mélange de tels composés.

De façon particulièrement avantageuse, la composition comporte :
(a) de 0,5 à 15% en poids d'un acide monocarboxylique de formule

   R-COOH

   avec R un radical alkyle à chaîne droite ou ramifiée, saturé ou insaturé, contenant de 6 à 12 atomes de carbone, ou d'un mélange de tels acides carboxyliques ;
(b) de 25 à 35% en poids d'un acide minéral fort;
(c) de 2 à 5% en poids d'un acide organique de formule :

   R'CH₂-CO₂H

   avec R' : H ou OH,
   ou de 5 à 10% en poids d'un mélange de tels acides organiques;
(d) de 7 à 13% en poids de tensioactif(s) anionique(s), et
(e) de 3 à 7% en poids d'un agent solubilisant consistant en un composé de formule :

   R"O(CH₂CH₂O)ₓ-H
dans laquelle
R" représente un radical alkyle en C₂ à C₆,
x représente un nombre entier de 1 à 3,
   ou un mélange de tels composés.

De façon préférentielle, l'acide minéral fort contenu dans la composition est choisi parmi l'acide sulfurique, l'acide phosphorique et leurs mélanges.

De façon avantageuse, on utilise dans la formulation suivant l'invention l'acide glycolique en tant qu'acide organique de formule R'CH₂-CO₂H ou un mélange d'acide glycolique et d'acide acétique en tant que mélange d'acides organiques de formule R'CH₂-CO₂H. A titre d'exemple avantageux, le mélange desdits acides organiques contient de 30 à 70% en poids d'acide glycolique et de 70 à 30 % en poids d'acide acétique.

Suivant un mode d'exécution particulier de l'invention, l'agent solubilisant est choisi parmi :
- le composé de formule CH₃(CH₂)₃-O-CH₂CH₂OH (2-butoxyéthanol ou "butylglycol")
   - le composé de formule CH₃(CH₂)₃-O-(CH₂CH₂O)₂H (2-(2-butoxyéthoxy)éthanol ou "butyldiglycol").

De façon avantageuse, la composition suivant l'invention contient, en outre, de 0,1 à 1,0% en poids d'un agent tensioactif non ionique de formule générale :

R'''O(CH₂CH₂O)_{y}H

dans laquelle
R"' est un radical alkyle saturé en C₁₆ à C₁₈, et
y est un nombre entier compris entre 8 et 40,
   ou un mélange de tels agents tensioactifs non ioniques.

De manière particulière, cet agent tensioactif non ionique peut consister en un composé de formule :

R'''O(CH₂CH₂O)_{y}H

dans laquelle
R"' est un radical alkyle saturé en C₁₆ à C₁₈, et
y est égal à environ 11.

Un tel agent tensioactif non ionique est, par exemple, vendu par la firme BASF sous le nom Lutensol AT 11®.

La composition contient avantageusement de 0,3 à 0,4% en poids d'un tel agent tensioactif non ionique.

Le pH de la composition est avantageusement inférieur à 5.

Suivant une forme d'exécution particulière, le rapport en poids acide minéral fort/acide(s) organique(s) de formule R'CH₂-CO₂H est compris entre 2/1 et 5/1.

De manière avantageuse, le rapport en poids acide(s) organique(s) de formule R'CH₂CO₂H/acide(s) monocarboxylique(s) de formule R-COOH est compris entre 3/1 et 10/1.

Le rapport en poids acide(s) organique(s) de formule R'CH₂-CO₂H/agent solubilisant de formule R"O-(CH₂CH₂O)_{X}-H est, de préférence, compris entre 3/1 et 1/1.

A titre de tensioactif anionique, on utilise avantageusement un mélange de tensioactifs anioniques, par exemple un mélange d'un tensioactif sulfonate, tel qu'un sulfonate d'alkylbenzene avec 8 à 16 atomes de carbone, par exemple du cumène sulfonate, et d'un tensioactif de la famille des acides éther carboxyliques, par exemple un mélange d'acides éther carboxyliques contenant de 15 à 25 atomes de carbone et répondant à la formule générale suivante :

R""(OC₂H₄)ₙOCH₂COOH

avec R'''' un groupe alkyle avec 4 à 12 atomes de carbone.

Le tensioactif sulfonate est choisi avantageusement parmi les sulfonates d'alkyles avec 8 à 16 atomes de carbone et les mélanges de ceux-ci. Lorsqu'on utilise un mélange de tensioactif sulfonate et de tensioactif acide éther carboxylique, on utilise un mélange contenant par exemple de 20 à 80% en poids de tensioactif sulfonate et de 80 à 20% en poids de tensioactif acide éther carboxylique. De façon avantageuse, le mélange contient toutefois plus de 50% en poids de tensioactif sulfonate.

L'invention a également pour objet l'utilisation d'une composition suivant l'invention en tant que composition fongicide, en particulier fongicide et bactéricide.

L'invention a encore pour objet un procédé de désinfection d'une installation (canalisation, cuves, ...) dans lequel on met une composition selon l'invention, de préférence sous forme diluée, en contact avec l'installation.

De façon avantageuse on dilue la composition concentrée de sorte que la solution, après dilution, a une teneur en acide minéral fort de moins de 0,4 %, et un pH inférieur à 4, de préférence à 3.

La désinfection est avantageusement effectuée à une température comprise entre 0 et 25°C.

Des exemples de formes de réalisation seront décrites ci-après :

Des compositions liquides suivant l'invention ont été préparées en mélangeant les ingrédients suivants : acide caprique (AC1) et/ou acide caprylique (AC2), mélange (50% en poids) acide glycolique et (50% en poids) acide acétique (AG-AA), acide sulfurique à 100% (AS), butyl diglycol ou 2-(2-butoxy-ethoxy)ethanol (BG), tensioactif (TA) tel qu'un mélange de sulfonate d'alkyles avec 8 à 12 atomes de carbone (72% en poids) d'acides éthers carboxyliques en C15 à C25 (24% en poids) et de Lutensol AT11® (3% en poids).

Le tableau suivant donne la teneur en poids des différents ingrédients pour les différentes compositions préparées.

| | AC1 | AC2 | AG-AA | AS | BG | TA | EAU |
|---|---|---|---|---|---|---|---|
| 1 | | 2 | 10 | 40 | 5,0 | 10,0 | 33,0 |
| 2 | 2 | | 10 | 40 | 5,0 | 10,0 | 33,0 |
| 3 | 0,5 | 0,5 | 8,4 | 31,2 | 5,0 | 11,35 | 43,05 |
| 4 | 0,5 | 0,5 | 20 | 30 | 10 | 10 | 29,0 |
| 5 | 1,25 | 1,25 | 7,7 | 39 | 5,0 | 11,5 | 34.3 |
| 6 | 2,5 | 2,5 | 10 | 35 | 5,0 | 15 | 30 |
| 7 | 1,5 | 1,5 | 9,7 | 31,2 | 5,0 | 11,35 | 39,75 |
| 8 | 1,5 | 1,5 | 8,4 | 31,2 | 3,0 | 11,5 | 42,9 |
| 9 | 2 | 1,5 | 8,0 | 33,0 | 6,0 | 15 | 34,5 |
| 10 | 1,5 | 1,5 | 8,4 | 31,2 | 5,0 | 10,0 | 42,4 |

Ces compositions concentrées avaient toutes un pH inférieur à 5 (pH variant de 0 à 2). A ces compositions concentrées. d'autres additifs peuvent le cas échéant être ajoutés. Les compositions concentrés étaient non moussantes et stables.

Selon des formes de réalisation de compositions concentrés selon l'invention. on a utilisé à la place d'un mélange d'acide glycolique et d'acide acétique, l'acide glycolique seul et l'acide acétique seul. Toutefois, l'acide glycolique mélangé à de l'acide acétique s'est avéré le plus approprié.

Pour leur utilisation dans la désinfection de canalisations, de cuves, ... les compositions concentrées ont été diluées de manière à ce que le pH de la composition diluée soit inférieur à 3. Les essais de désinfection au moyen de la composition 7 avec un taux de dilution de 200 fois ont montré que les désinfections aussi bien bactérienne que levurienne étaient rapides et que les problèmes de moussage étaient évités.

### TEST MOUSSE

Afin de vérifier le caractère non moussant ou non accumulant des mousses de formulations selon l'invention, un test à la burette et un test au générateur de mousse ont été effectués.

### Test à la burette :

La procédure est la suivante :
On remplit une burette graduée de 100 ml avec 50 ml de la solution d'emploi (facteur de dilution 200 x) et on la ferme à l'aide d'un bouchon.
On secoue vigoureusement la burette 10 x et on note ensuite durant 1 minute toutes les 15 secondes le niveau de la mousse.
On recommence l'opération 3 x avec la même solution afin de vérifier s'il y a accumulation de mousse.

### Résultat :

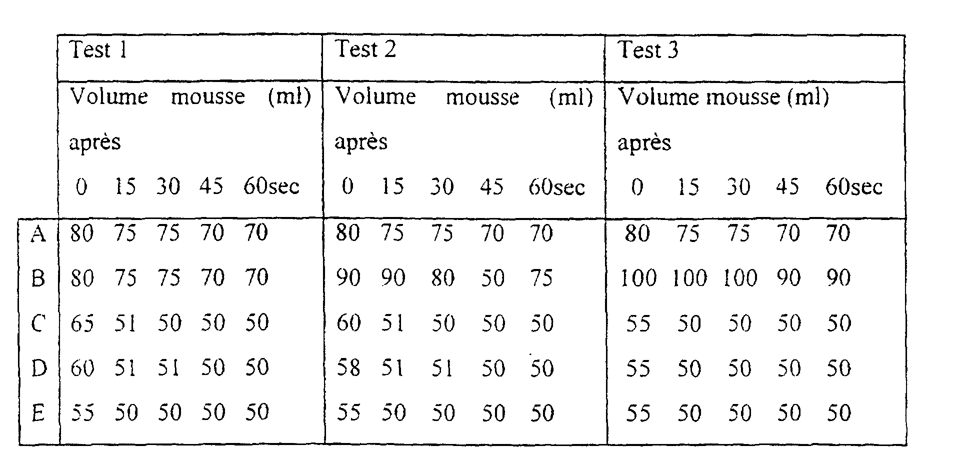

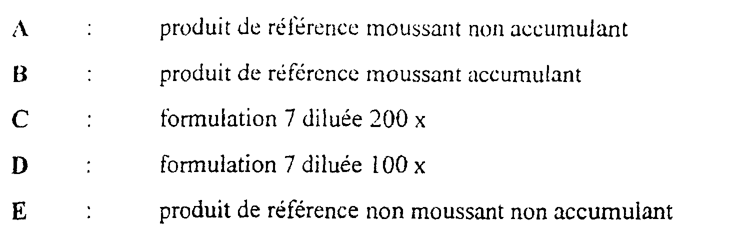

Il ressort de ce tableau que la formulation 7 est peu moussante et non accumulante. On observe même une atténuation de la mousse avec la répétition du test.

### Test au générateur de mousse :

Le principe est le suivant :

Une solution d'emploi (5 litres) est placée dans une cuve en acier inoxydable. A l'aide d'une pompe (débit : 3000 l/h), la solution est circulée au travers de ± 4 mètres de canalisation (de différents diamètres) dont 1 mètre est rempli d'un grillage en acier inoxydable afin d'augmenter les pertes de charge.
Durant trois période de 8 heures, le comportement de la solution est observé.

A l'exception d'une écume sur la solution, nous n'avons pas observé de formation de mousse, ni cavitation de la pompe.
La formulation 7 a donc les caractéristiques d'une formulation non moussante.

### TEST D'ACTIVITE MICROBICIDE

Principe de la méthode.

La méthode de mesure s'inspire de la méthode européenne préconisée par le Conseil de l'Europe (Strasbourg 1987) : *"Test methods for the antimicrobial activity of desinfectants in food hygiene"*, et du projet de norme européenne prEN1276 (Décembre 1993) : *"Désinfectants et antiseptiques chimiques - Essai quantitatif de suspension pour l'évaluation de l'activité bactéricide des antiseptiques et des désinfectants chimiques utilisés dans le domaine de l'alimentation, dans l'industrie. dans les domaines domestiques et en collectivité".*

### Le principe en est le suivant :

On met en contact une suspension microbienne. dans une eau de composition déterminée (dureté correspondant à 300ppm de CaCO₃) et contenant le produit germicide à sa concentration d'emploi, pendant des temps prédéterminés (par exemple 3.6 et 12 minutes), à la température choisie. 3 ou 20°C. Ensuite, on dénombre des germes survivants. ce qui permet de déterminer le temps nécessaire pour obtenir 5 réductions décimales de la population initiale.

### Les résultats obtenus sont repris dans les tableaux suivants :

### Souches microbiennes utilisées

### 1. Bactéries

| N de la souche | Dénomination |
|---|---|
| 404 | Enterobacter cloacae DSM 3264 |
| 401 | Enterococcus faecium ATCC 10541 |
| 204 | Escherichia coli ATCC 10536 |
| 403 | Lactobacillus brevis DSM 6235 |
| 504 | Pediococcus damnosus ATCC 43013 |
| 402 | Proteus mirabilis ATCC 14153 |
| 290 | Pseudomonas aeruginosa ATCC 15442 |
| 333 | Staphylococcus aureus subs. Aureus ATCC 6538 |

### 2. Levures

| N de la souche | Dénomination |
|---|---|
| 386 | Candida albicans ATCC 10231 |
| 247 | Saccharomyces cerevisiae ATCC 9763 |
| 196 | Saccharomyces cerevisiae (diastaticus) CBS 1782 |

Temps de destruction observés.

Le tableau suivant donne le temps (en minutes) requis pour obtenir 5 réductions décimales, aux températures de 20 et de 3°C, avec une concentration de 1,0 % et de 0,5 % volume de la composition :

| Temp.-> | 20°C | | 3°C | |
|---|---|---|---|---|
| conc.-> | 1,0% vol. | 0,5 % vol. | 1,0 % vol. | 0,5 % vol. |
| Souche | | | | |
| 404 | <5,0 | <5,0 | <5,0 | <5,0 |
| 401 | <5,0 | <5.0 | <5,0 | 5,7 |
| 204 | <5,0 | <5,0 | <5,0 | <5,0 |
| 403 | <5,0 | <5,0 | <5,0 | < 5,0 |
| 504 | <5,0 | <5,0 | <5,0 | < 5,0 |
| 402 | <5,0 | <5,0 | <5,0 | < 5,0 |
| 290 | <5,0 | <5,0 | <5,0 | <5,0 |
| 333 | <5,0 | <5,0 | <5,0 | < 5,0 |
| 386 | <5,0 | <5,0 | <5,0 | 6 |
| 247 | <5,0 | <5,0 | 9 | 11 |
| 196 | <5,0 | <5,0 | 5,1 | 9 |

La composition 7 peut donc être considérée bactéricide et levuricide.

## Revendications

1. Composition désinfectante bactéricide et levuricide comportant :
(a) un acide monocarboxylique de formule
R-COOH
avec R un radical alkyle à chaîne droite ou ramifiée, saturé ou insaturé, contenant de 6 à 12 atomes de carbone, ou un mélange de tels acides carboxyliques ;
(b) un acide minéral fort;
(c) un acide organique de formule
R'CH₂-CO₂H
avec R' : H ou OH
ou un mélange de tels acides organiques;
(d) un ou des tensioactifs anioniques;
(e) un agent solubilisant consistant en un composé de formule
R"O(CH₂CH₂O)ₓ-H
dans laquelle
R" représente un radical alkyle en C₂ à C₆
x représente un nombre entier de 1 à 3
ou un mélange de tels composés;
(f) de l'eau.

2. Composition suivant la revendication 1, **caractérisée en ce qu'**elle comporte :
(a) de 0,25 à 20% en poids d'un acide monocarboxylique de formule
R-COOH
avec R un radical alkyle à chaîne droite ou ramifiée, saturé ou insaturé, contenant de 6 à12 atomes de carbone, ou d'un mélange de tels acides carboxyliques ;
(b) de 20 à 40% en poids d'un acide minéral fort;
(c) de 0,25 à 7% en poids d'un acide organique de formule
R'CH₂-CO₂H
avec R' : H ou OH
ou de 0,5 à 12% en poids d'un mélange de tels acides organiques;
(d) de 5 à 20% en poids de tensioactif(s) anionique(s), et
(e) de 1 à 10% en poids d'un agent solubilisant consistant en un composé de formule
R"O(CH₂CH₂O)ₓ-H
dans laquelle
R" représente un radical alkyle en C₂ à C₆
x représente un nombre entier de 1 à 3
ou un mélange de tels composés;

3. Composition suivant la revendication 1, **caractérisée en ce qu'**elle comporte :
(a) de 0,5 à 15% en poids d'un acide monocarboxylique de formule
R-COOH
avec R un radical alkyle à chaîne droite ou ramifiée, saturé ou insaturé, contenant de 6 à 12 atomes de carbone, ou d'un mélange de tels acides carboxyliques ;
(b) de 25 à 35% en poids d'un acide minéral fort;
(c) de 2 à 5% en poids d'un acide organique de formule
R'CH₂-CO₂H
avec R' : H ou OH
ou de 5 à 10% en poids d'un mélange de tels acides organiques;
(d) de 7 à 13% en poids de tensioactif(s) anionique(s), et
(e) de 3 à 7% en poids d'un agent solubilisant consistant en un composé de formule
R"O(CH₂CH₂O)ₓ-H
dans laquelle
R" représente un radical alkyle en C₂ à C₆
x représente un nombre entier de 1 à 3
ou un mélange de tels composés;

4. Composition suivant l'une quelconque des revendications précédentes, **caractérisée en ce que** l'acide minéral fort est choisi parmi l'acide sulfurique, l'acide phosphorique et leurs mélanges.

5. Composition suivant la revendication 4, **caractérisée en ce que** l'acide minéral fort est l'acide sulfurique.

6. Composition suivant l'une quelconque des revendications précédentes, **caractérisée en ce que** le mélange d'acides organiques de formule R'CH₂-CO₂H, contient de 30 à 70% en poids d'acide glycolique et de 70 à 30% en poids d'acide acétique.

7. Composition suivant l'une quelconque des revendications précédentes, **caractérisée en ce que** l'agent solubilisant est choisi parmi
- le composé de formule CH₃(CH₂)₃-O-CH₂-CH₂OH (butylglycol)
- le composé de formule CH₃(CH₂)₃-O-(CH₂CH₂O)₂H (butyldiglycol) et les mélanges de ces composés.

8. Composition suivant l'une quelconque des revendications précédentes, **caractérisée en ce qu'**elle contient en outre de 0,1 à 1,0 % en poids d'un agent tensioactif non ionique de formule générale
R'''O(CH₂CH₂O)_{y}H
dans laquelle
R''' est un radical alkyle saturé en C₁₆ à C₁₈
y est un nombre entier compris entre 8 et 40
ou un mélange de tels agents tensioactifs non ioniques.

9. Composition suivant la revendication 8, **caractérisée en ce que** l'agent tensioactif non ionique est un composé de formule générale
R'''O(CH₂CH₂O)_{y}H
dans laquelle
R''' est un radical alkyle saturé en C₁₆ à C₁₈
et y égal à environ 11

10. Composition suivant l'une quelconque des revendications 8 et 9, **caractérisée en ce qu'**elle contient de 0,3 à 0,4 % en poids dudit agent tensioactif non ionique.

11. Composition suivant l'une quelconque des revendications précédentes, **caractérisée en ce qu'**elle a un pH inférieur à 5.

12. Composition suivant la revendication 11, **caractérisée en ce qu'**elle a un pH égal
ou inférieur à 2.

13. Composition suivant l'une quelconque des revendications précédentes, **caractérisée en ce que** le rapport en poids acide minéral fort / acide(s) organique(s) de formule R'CH₂-CO₂H est compris entre 2/1 et 5/1.

14. Composition suivant l'une quelconque des revendications précédentes, **caractérisée en ce que** le rapport en poids acide(s) organique(s) de formule R'CH₂-CO₂H / acide(s) monocarboxylique(s) de formule R-COOH est compris entre 3/1 et 10/1.

15. Composition suivant l'une quelconque des revendications précédentes, **caractérisée en ce que** le rapport en poids acide(s) organique(s) de formule R'CH₂-CO₂H / agent solubilisant de formule R''O-(CH₂CH₂O)ₓ-H est compris entre 3/1 et 1/1.

16. Composition suivant l'une quelconque des revendications précédentes, **caractérisée en ce qu'**elle contient un mélange de tensioactifs anioniques, ce mélange comprenant un ou plusieurs sulfonates tensioactifs et un ou plusieurs acides éther carboxyliques tensioactifs.

17. Composition suivant la revendication 16, **caractérisée en ce qu'**elle comprend un
ou plusieurs sulfonates d'alkylbenzène avec 8 à 16 atomes de carbone.

18. Composition suivant l'une quelconque des revendications 16 et 17, **caractérisée en ce qu'**elle comprend un ou plusieurs sulfonates d'alkyle avec 8 à 16 atomes de carbone.

19. Composition suivant l'une quelconque des revendications 16 à 18, **caractérisée en ce qu'**elle comprend un mélange d'acides éther carboxyliques contenant de 15 à 25 atomes de carbone et répondant à la formule générale suivante :
R''''(OC₂H₄)ₙOCH₂COOH
dans laquelle R'''' représente un groupe alkyle avec 4 à 12 atomes de carbone.

20. Composition suivant l'une quelconque des revendications 16 à 19, **caractérisée en ce que** le mélange de tensioactifs anioniques comprend de 20 à 80% en poids de sulfonate(s) tensioactif(s) et de 80 à 20% en poids d'acide(s) éther carboxylique(s) tensioactif(s).

21. Composition suivant l'une quelconque des revendications 16 à 20, **caractérisée en ce que** le mélange de tensioactifs anioniques comprend plus de 50% en poids de sulfonate(s) tensioactifs).

22. Procédé de désinfection d'installation dans lequel on met une composition suivant l'une quelconque des revendications 1 à 21 en contact avec l'installation à désinfecter.

23. Procédé suivant la revendication 22, **caractérisé en ce qu'**on utilise une composition suivant l'une quelconque des revendications 1 à 21 et **en ce qu'**on dilue la composition de sorte que la teneur en acide minéral fort soit inférieure à 0,4 %.

24. Procédé suivant l'une quelconque des revendications 22 et 23, **caractérisé en ce qu'**on utilise une composition suivant l'une quelconque des revendications 1 à 21 et **en ce qu'**on dilue la composition de sorte que le pH soit inférieur à 4, de préférence inférieur à 3.

## Patentansprüche

1. Desinfizierende Bakterien und Hefepilze tötende Zusammensetzung, welche folgendes aufweist:
(a) eine Monocarboxylsäure mit folgender Formel:
R-COOH
mit R einem Alkylradikal mit gerader oder verzweigter Kette, gesättigt oder ungesättigt, mit 6 bis 12 Kohlenstoffatomen, oder einer Mischung solcher Carboxylsäuren;
(b) eine starke anorganische Säure;
(c) eine organische Säure mit der Formel
R'CH₂-CO₂H
mit R': H oder OH
oder einer Mischung solcher organischer Säuren;
(d) ein oder mehrere anionische Netzmittel;
(e) ein Lösungsvermittler, der aus folgender Formel besteht:
R"O(CH₂CH₂O)_{X}-H,
in der
R" ein Alkylradikal in C2 bis C6 darstellt;
X eine ganze Zahl zwischen 1 und 3 darstellt;
oder eine Mischung solcher Verbindungen;
(f) Wasser.

2. Zusammensetzung nach Anspruch 1, **dadurch gekennzeichnet, dass** sie folgendes aufweist:
(a) 0,25 bis 20 Gewichtsprozente einer Monocarboxylsäure mit folgender Formel:
R-COOH
mit R, einem Alkylradikal mit gerader oder verzweigter Kette, gesättigt oder ungesättigt, mit 6 bis 12 Kohlenstoffatomen, oder einer Mischung solcher Carboxylsäuren;
(b) 20 bis 40 Gew.-% einer starken anorganische Säure;
(c) 0,25 bis 7 Gew.-% einer organischen Säure mit der Formel
R'CH₂-CO₂H
mit R': H oder OH oder 0,5 bis 12 Gew.-% einer Mischung solcher organischer Säuren;
(d) 5 bis 20 Gew.-% eines oder mehrerer anionischer Netzmittel;
(e) 1 bis 10 Gew.-% eines Lösungsvermittlers, der aus folgender Formel besteht:
R"O(CH₂CH₂O)ₓ-H
in der
R" ein Alkylradikal in C2 bis C6 darstellt,
X eine ganze Zahl zwischen 1 und 3 darstellt,
oder eine Mischung solcher Verbindungen.

3. Zusammensetzung nach Anspruch 1, **dadurch gekennzeichnet, dass** sie folgendes aufweist:
(a) 0,5 bis 15 Gew.-% einer Monocarboxylsäure mit folgender Formel:
R-COOH
mit R einem Alkylradikal mit gerader oder verzweigter Kette, gesättigt oder ungesättigt, mit 6 bis 12 Kohlenstoffatomen, oder einer Mischung solcher Carboxylsäuren;
(b) 25 bis 35 Gew.-% einer starken anorganische Säure;
(c) 2 bis 5 Gew.-% einer organischen Säure mit der Formel
R'CH₂-CO₂H
mit R': H oder OH
oder 5 bis 10 Gew.-% einer Mischung solcher organischer Säuren;
(d) 7 bis 13 Gew.-% eines oder mehrerer anionischer Netzmittel;
(e) 3 bis 7 Gewichtsprozente eines Lösungsvermittlers, der aus folgender Formel besteht:
R"O (CH₂CH₂O)ₓ-H
in der
R" ein Alkylradikal in C2 bis C6 darstellt
X eine ganze Zahl zwischen 1 und 3 darstellt
oder eine Mischung solcher Verbindungen.

4. Zusammensetzung nach irgendeinem der vorangehenden Ansprüche, **dadurch gekennzeichnet, dass** die starke anorganische Säure unter der Schwefelsäure, der Phosphorsäure oder ihren Mischungen gewählt wird.

5. Zusammensetzung nach Anspruch 4, **dadurch gekennzeichnet, dass** die starke anorganische Säure die Schwefelsäure ist.

6. Zusammensetzung nach irgendeinem der vorangehenden Ansprüche, **dadurch gekennzeichnet, dass** die Mischung organischer Säuren der Formel R'CH₂-CO₂H zwischen 30 und 70 Gewichtsprozente Glykolsäure und zwischen 70 und 30 Gew.-% Essigsäure enthält.

7. Zusammensetzung nach einem der vorangehenden Ansprüche, **dadurch gekennzeichnet, dass** der Lösungsvermittler ausgewählt wird unter:
- der Verbindung mit der Formel CH₃(CH₂)₃-O-CH₂-CH₂OH (Butylglykol)
- der Verbindung mit der Formel CH₃(CH₂)₃-O-(CH₂CH₂O)₂H (Butyldiglykol) und den Mischungen dieser Verbindungen.

8. Zusammensetzung nach irgendeinem der vorangehenden Ansprüche, **dadurch gekennzeichnet, dass** sie ausserdem zwischen 0,1 bis 1,0 Gew.-% eines nicht-ionischen Netzmittels mit der folgenden allgemeinen Formel aufweist:
R"'O(CH₂CH₂O)_{Y}-H
in der
R"' ein gesättigtes Alkylradikal in C16 bis C18 ist,
Y eine ganze Zahl zwischen 8 und 40 darstellt
oder eine Mischung solcher nicht-ionischer Netzmittel.

9. Zusammensetzung nach Anspruch 8, **dadurch gekennzeichnet, dass** das nichtionische Netzmittel 0,1 bis 1,0 Gew.-% folgende allgemeine Formel aufweist:
R'''O(CH₂CH₂O)_{Y}-H
in der
R''' ein gesättigtes Alkylradikal in C16 bis C18 ist und
Y ungefähr gleich 11 ist.

10. Zusammensetzung nach irgendeinem der vorangehenden Ansprüche 8 und 9, **dadurch gekennzeichnet, dass** sie zwischen 0,3 bis 0,4 Gew.-% des besagten nichtionischen Netzmittels aufweist.

11. Zusammensetzung nach irgendeinem der vorangehenden Ansprüche, **dadurch gekennzeichnet, dass** sie einen pH-Wert unter 5 aufweist.

12. Zusammensetzung nach Anspruch 11, **dadurch gekennzeichnet, dass** sie einen pH-Wert gleich oder unter 2 aufweist.

13. Zusammensetzung nach irgendeinem der vorangehenden Ansprüche, **dadurch gekennzeichnet, dass** das Gewichtsverhältnis starke anorganische Säure/ organische Säure(n) mit der Formel R'CH₂-CO₂H zwischen 2/1 und 5/1 liegt.

14. Zusammensetzung nach irgendeinem der vorangehenden Ansprüche, **dadurch gekennzeichnet, dass** das Gewichtsverhältnis organische Säure(n) R'CH₂-CO₂H/Monocarboxylsäure(n) der Formel R-COOH zwischen 3/1 und 10/1 liegt.

15. Zusammensetzung nach irgendeinem der vorangehenden Ansprüche, **dadurch gekennzeichnet, dass** das Gewichtsverhältnis organische Säure(n) R'CH₂-CO₂H/Lösungsvermittler der Formel R"O-(CH₂CH₂O)ₓ-H zwischen 3/1 und 1/1 liegt.

16. Zusammensetzung nach irgendeinem der vorangehenden Ansprüche, **dadurch gekennzeichnet, dass** sie eine Mischung aus anionischen Netzmitteln enthält, wobei diese Mischung ein oder mehrere oberflächenaktive Sulfonate und eine oder mehrere oberflächenaktive Carboxyl-Ethyl-Säuren aufweist.

17. Zusammensetzung nach Anspruch 16, **dadurch gekennzeichnet, dass** sie ein oder mehrere Alkylbenzensulfonate mit 8 bis 16 Kohlenstoffatomen aufweist.

18. Zusammensetzung nach irgendeinem der Ansprüche 16 und 17, **dadurch gekennzeichnet, dass** sie ein oder mehrere Alkylsulfonate mit 8 bis 16 Kohlenstoffatomen aufweist.

19. Zusammensetzung nach irgendeinem der Ansprüche 16 bis 18, **dadurch gekennzeichnet, dass** sie eine Mischung aus Carboxyl-Ethyl-Säuren aufweist, welche 15 bis 25 Kohlenstoffatome enthält und die folgende allgemeine Formel hat:
R" "(OC₂H₄)ₙOCH₂COOH
in der R"" eine Alkylgruppe mit 4 bis 12 Kohlenstoffatomen darstellt.

20. Zusammensetzung nach irgendeinem der Ansprüche 16 bis 19, **dadurch gekennzeichnet, dass** die Mischung aus anionischen Netzmitteln zwischen 20 und 80 Gew.-% (eines) oberflächenaktiven(er) Sulfonate(s) und 80 bis 20 Gew.-% oberflächenaktiver Carboxyl-Ethyl -Säure(n) enthält.

21. Zusammensetzung nach irgendeinem der Ansprüche 16 bis 20, **dadurch gekennzeichnet, dass** die Mischung aus anionischen Netzmitteln mehr als 50 Gew.-% (eines) oberflächenaktiven(er) Sulfonats(e) aufweist.

22. Verfahren zur Anlagendesinfizierung, in dem eine Zusammensetzung nach irgendeinem der Ansprüche 1 bis 21 in Berührung mit der zu desinfizierenden Anlage gebracht wird.

23. Zusammensetzung nach Anspruch 22, **dadurch gekennzeichnet, dass** eine Zusammensetzung nach irgendeinem der Ansprüche 1 bis 21 benutzt wird und dadurch, dass die Zusammensetzung so aufgelöst wird, dass der Gehalt an starker anorganischer Säure unter 0,4 % liegt.

24. Zusammensetzung nach irgendeinem der Ansprüche 22 und 23, **dadurch gekennzeichnet, dass** eine Zusammensetzung nach irgendeinem der Ansprüche 1 bis 21 benutzt wird und dadurch, dass die Zusammensetzung so aufgelöst wird, dass der pH-Wert unter 4, vorzugsweise unter 3, liegt.

## Claims

1. Bactericidal and yeast-killing disinfecting composition comprising:
(a) a monocarboxylic acid of formula
R-COOH
with R a saturated or unsaturated, straight- or branched-chain alkyl radical comprising from 6 to 12 carbon atoms or a mixture of such carboxylic acids;
(b) a strong inorganic acid,
(c) an organic acid of formula:
R'CH₂-CO₂H
with R': H or OH,
or a mixture of such organic acids;
(d) one or more anionic surfactants;
(e) a solubilizing agent consisting of a compound of formula:
R''O(CH₂CH₂O)ₓ-H
in which
R" represents a C₂ to C₆ alkyl radical,
x represents an integer from 1 to 3, or a mixture of such compounds;
(f) water.

2. Composition according to claim 1, **characterized in that** it comprises:
(a) from 0.25 to 20% by weight of a monocarboxylic acid of formula:
R-COOH
with R a saturated or unsaturated, straight- or branched-chain alkyl radical comprising from 6 to 12 carbon atoms, or of a mixture of such carboxylic acids;
(b) from 20 to 40% by weight of a strong inorganic acid;
(c) from 0.25 to 7% by weight of an organic acid of formula:
R'CH₂-CO₂H
with R': H or OH, or from 0.5 to 12% by weight of a mixture of such organic acids;
(d) from 5 to 20% by weight of anionic surfactant(s), and
(e) from 1 to 10% by weight of a solubilizing agent consisting of a compound of formula:
R"O(CH₂CH₂O)ₓ-H
in which
R" represents a C₂ to C₆ alkyl radical,
x represents an integer from 1 to 3, or a mixture of such compounds.

3. Composition according to claim 1, **characterized in that** it comprises:
(a) from 0.5 to 15% by weight of a monocarboxylic acid of formula:
R-COOH
with R a saturated or unsaturated, straight- or branched-chain alkyl radical comprising from 6 to 12 carbon atoms, or of a mixture of such carboxylic acids;
(b) from 25 to 35% by weight of a strong inorganic acid;
(c) from 2 to 5% by weight of an organic acid of formula:
R'CH₂-CO₂H
with R': H or OH,
or from 5 to 10% by weight of a mixture of such organic acids;
(d) from 7 to 13% by weight of anionic surfactant(s), and
(e) from 3 to 7% by weight of a solubilizing agent consisting of a compound of formula:
R"O(CH₂CH₂O)ₓ-H
in which
R" represents a C₂ to C₆ alkyl radical,
x represents an integer from 1 to 3, or a mixture of such compounds.

4. Composition according to any one of the preceding claims, **characterized in that** the strong inorganic acid is chosen from sulfuric acid, phosphoric acid and their mixtures.

5. Composition according to claim 4, **characterized in that** the strong inorganic acid is sulfuric acid.

6. Composition according to any one of the preceding claims, **characterized in that** the mixture of organic acids of formula R'CH₂-CO₂H contains from 30 to 70% by weight of glycolic acid and from 70 to 30% by weight of acetic acid.

7. Composition according to any one of the preceding claims, **characterized in that** the solubilizing agent is chosen from:
- the compound of formula CH₃(CH₂) ₃-O-CH₂-CH₂OH (butyl glycol)
- the compound of formula CH₃(CH₂)₃-O-(CH₂CH₂O)₂H (butyl diglycol) and the mixtures of these compounds.

8. Composition according to any one of the preceding claims, **characterized in that** it additionally comprises from 0.1 to 1.0% by weight of a nonionic surface-active agent of general formula:
R'''O(CH₂CH₂O)_{y}H
in which
R''' is a saturated C₁₆ to C₁₈ alkyl radical,
y is an integer between 8 and 40,
or a mixture of such nonionic surface-active agents.

9. Composition according to claim 8, **characterized in that** the nonionic surface-active agent is a compound of general formula:
R'''O(CH₂CH₂O)_{y}H
in which
R''' is a saturated C₁₆ to C₁₈ alkyl radical,
and y is equal to approximately 11.

10. Composition according to either one of claims 8 and 9, **characterized in that** it comprises from 0.3 to 0.4% by weight of said nonionic surface-active agent.

11. Composition according to any one of the preceding claims, **characterized in that** it has a pH of less than 5.

12. Composition according to claim 11,
**characterized in that** it has a pH equal to or less than 2.

13. Composition according to any one of the preceding claims, **characterized in that** the strong inorganic acid/organic acid(s) of formula R'CH₂-CO₂H ratio by weight is between 2/1 and 5/1.

14. Composition according to any one of the preceding claims, **characterized in that** the organic acid(s) of formula R'CH₂-CO₂H/monocarboxylic acid(s) of formula R-COOH ratio by weight is between 3/1 and 10/1.

15. Composition according to any one of the preceding claims, **characterized in that** the organic acid(s) of formula R'CH₂-CO₂H/solubilizing agent of formula R"O-(CH₂CH₂O)ₓ-H ratio by weight is between 3/1 and 1/1.

16. Composition according to any one of the preceding claims, **characterized in that** it comprises a mixture of anionic surfactants, this mixture comprising one or more surface-active sulfonates and one or more surface-active ether carboxylic acids.

17. Composition according to claim 16,
**characterized in that** it comprises one or more alkybenzenesulfonates with 8 to 16 carbon atoms.

18. Composition according to either one of claims 16 and 17, **characterized in that** it comprises one or more alkylsulfonates with 8 to 16 carbon atoms.

19. Composition according to any one of claims 16 to 18, **characterized in that** it comprises a mixture of ether carboxylic acids comprising from 15 to 25 carbon atoms and corresponding to the following general formula:
R''''(OC₂H₄)ₙOCH₂COOH
in which R"" represents an alkyl group with 4 to 12 carbon atoms.

20. Composition according to any one of claims 16 to 19, **characterized in that** the mixture of anionic surfactants comprises from 20 to 80% by weight of surface-active sulfonate(s) and from 80 to 20% by weight of surface-active ether carboxylic acid(s).

21. Composition according to any one of claims 16 to 20, **characterized in that** the mixture of anionic surfactants comprises more than 50% by weight of surface-active sulfonate(s).

22. Plant disinfecting process, in which a composition according to any one of claims 1 to 21 is brought into contact with the plant to be disinfected.

23. Process according to claim 22, **characterized in that** use is made of a composition according to any one of claims 1 to 21 and **in that** the composition is diluted so that the content of strong inorganic acid is less than 0.4%.

24. Process according to either one of claims 22 and 23, **characterized in that** use is made of a composition according to any one of claims 1 to 21 and **in that** the composition is diluted so that the pH is less than 4, preferably less than 3.
